(19) Europäisches Patentamt / European Patent Office / Office européen des brevets

(11) **EP 3 121 538 A1**

(12) **EUROPEAN PATENT APPLICATION**
published in accordance with Art. 153(4) EPC

(43) Date of publication:
**25.01.2017 Bulletin 2017/04**

(21) Application number: **14886650.2**

(22) Date of filing: **17.03.2014**

(51) Int Cl.:
*F25B 1/00* (2006.01)   *C09K 5/04* (2006.01)
*F28F 1/40* (2006.01)

(86) International application number:
**PCT/JP2014/057049**

(87) International publication number:
**WO 2015/140886 (24.09.2015 Gazette 2015/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
 • **Mitsubishi Electric Corporation**
   **Chiyoda-ku**
   **Tokyo 100-8310 (JP)**

 • **Asahi Glass Company, Limited**
   **Tokyo 100-8405 (JP)**

(72) Inventor: **YAMASHITA, Koji**
   **Tokyo 100-8310 (JP)**

(74) Representative: **Pfenning, Meinig & Partner mbB**
   **Patent- und Rechtsanwälte**
   **Theresienhöhe 11a**
   **80339 München (DE)**

(54) **REFRIGERATION CYCLE APPARATUS**

(57)    A refrigeration cycle apparatus includes a refrigeration cycle connecting a compressor 10, a heat source side heat exchanger 12, an expansion device 16, and a load side heat exchanger 15 by refrigerant pipes and configured to circulate refrigerant. The refrigerant is a single component refrigerant of 1,1,2-trifluoroethylene or a mixed refrigerant containing 1,1,2-trifluoroethylene. At least one of the heat source side heat exchanger 12 and the load side heat exchanger 15 includes one or more passages 49, a heat transfer enhancement mechanism (concavo-convex surface 50a) provided to the one or more passages 49, and two connecting pipes 41 and 42 serving as an inlet and an outlet for the refrigerant from and to another component in the refrigeration cycle. A total cross sectional area of internal cross sectional areas of the one or more passages 49 is larger than an internal cross sectional area of at least one of the two connecting pipes 41 and 42.

FIG. 5

## Description

Technical Field

The present invention relates to a refrigeration cycle apparatus of an air-conditioning apparatus or other apparatuses applied, for example, to building multi-air-conditioning apparatuses or other apparatuses.

Background Art

A refrigeration cycle apparatus including a refrigerant circuit configured to circulate refrigerant for air-conditioning such as a building multi-air-conditioning apparatus generally uses a substance containing hydrogen and carbon as refrigerant, where examples of such a substance include non-flammable R410A, low flammable R32, and highly flammable propane. These substances have high stability in the refrigeration cycle apparatus and can be used as refrigerant as long as a few decades although the substances vary in life spend before the substances are decomposed into other substances in the atmosphere when the substances are released into the atmosphere.

In contrast, some substances containing hydrogen and carbon have poor stability even in the refrigeration cycle apparatus and are hardly usable as refrigerant. Examples of such unstable substances include substances having the property of undergoing disproportionation reaction. The disproportionation is a property whereby the same chemical species change into other substances as a result of reactions. For example, in a state where adjacent chemical species in a liquid state are very close to each other, when some kind of strong energy is applied to the refrigerant, the energy causes disproportionation reaction, and consequently, the adjacent species react with each other and thereby change into other substances. When disproportionation reaction occurs, heat is generated, causing sudden temperature rises, which in turn can result in sudden pressure rises. For example, when a substance having the property of undergoing disproportionation reaction is used as refrigerant in a refrigeration cycle apparatus, being enclosed in a pipe of copper or another material, an accident such as a pipe rupture may occur when the pipe can no longer endure pressure rises of the refrigerant in the pipe. Examples of substances known to have the property of causing such disproportionation reaction include 1,1,2-trifluoroethylene (HFO-1123) and acetylene.

Also, a heat cycle system (refrigeration cycle apparatus) uses 1,1,2-trifluoroethylene (HFO-1123) as a working medium for a heat cycle (e.g., Patent Literature 1).

Citation List

Patent Literature

Patent Literature 1: International Publication No. 12/157764 (Page 3, Page 22, Fig. 1, and other items)

Summary of Invention

Technical Problem

In a refrigeration cycle apparatus such as the heat cycle system described in Patent Literature 1, 1,1,2-trifluoroethylene (HFO-1123) is described as being used as a working medium for the heat cycle. 1,1,2-trifluoroethylene (HFO-1123) is a substance having the property of undergoing disproportionation reaction. When this substance is used as it is as refrigerant, in a state where adjacent chemical species in a liquid, two-phase, or similar state are located very close to each other, the adjacent species can react with each other due to some kind of energy and thereby change into other substances, not only ceasing to serve as refrigerant, but also causing an accident such as a pipe rupture due to sudden pressure rises. Thus, there is a problem in that 1,1,2-trifluoroethylene (HFO-1123) has to be used as refrigerant in such a way 1,1,2-trifluoroethylene (HFO-1123) does not undergo such disproportionation reaction. Thus, a solution is necessary to prevent the disproportionation reaction, but Patent Literature 1 and other conventional literatures make no mention of a method of implementing an apparatus that prevents disproportionation reaction.

The present invention has been made to solve the above problem and provides a refrigeration cycle apparatus that can reduce energy applied from outside to refrigerant and safely use a substance having the property of undergoing disproportionation reaction as refrigerant.

Solution to Problem

A refrigeration cycle apparatus according to one embodiment of the present invention includes a refrigeration cycle connecting a compressor, a first heat exchanger, an expansion device, and a second heat exchanger by refrigerant pipes and configured to circulate refrigerant. The refrigerant is a single component refrigerant of a substance having a property of undergoing disproportionation reaction or a mixed refrigerant containing a substance having a property of undergoing disproportionation reaction and another substance. At least one of the first heat exchanger and the second heat exchanger includes one or more passages, a heat transfer enhancement mechanism provided to the one or more passages, and two connecting pipes serving as an inlet and an outlet for the refrigerant from and to another component in the refrigeration cycle. A total cross sectional area of internal cross sectional areas of the one or more passages is larger than an internal cross sectional area of at least one of the two connecting pipes.

Advantageous Effects of Invention

The refrigeration cycle apparatus according to one embodiment of the present invention prevents a substance, such as 1,1,2-trifluoroethylene (HFO-1123), having the property of undergoing disproportionation reaction from undergoing disproportionation reaction and becoming unavailable for use as refrigerant and causing an accident such as a pipe rupture, and thereby allows the substance to be used safely as refrigerant.

Brief Description of Drawings

[Fig. 1] Fig. 1 is a schematic diagram illustrating an installation example of a refrigeration cycle apparatus according to Embodiment 1 of the present invention.
[Fig. 2] Fig. 2 is a circuit block diagram illustrating an example of a circuit configuration of the refrigeration cycle apparatus according to Embodiment 1 of the present invention.
[Fig. 3] Fig. 3 is a circuit block diagram of the refrigeration cycle apparatus according to Embodiment 1 of the present invention during cooling operation.
[Fig. 4] Fig. 4 is a circuit block diagram of the refrigeration cycle apparatus according to Embodiment 1 of the present invention during heating operation.
[Fig. 5] Fig. 5 is a schematic diagram illustrating a configuration of a heat exchanger of the refrigeration cycle apparatus according to Embodiment 1 of the present invention.
[Fig. 6] Fig. 6 is a schematic cross-sectional view of a configuration example in which grooving has been applied to an inner surface (heat transfer surface) of a heat transfer tube used for the heat exchanger of the refrigeration cycle apparatus according to Embodiment 1 of the present invention.
[Fig. 7] Fig. 7 is a schematic diagram illustrating another configuration of the heat exchanger of the refrigeration cycle apparatus according to Embodiment 1 of the present invention.
[Fig. 8] Fig. 8 is a schematic diagram illustrating another configuration of the heat exchanger of the refrigeration cycle apparatus according to Embodiment 1 of the present invention.
[Fig. 9] Fig. 9 is a schematic diagram of another heat transfer tube used for the heat exchanger of the refrigeration cycle apparatus according to Embodiment 1 of the present invention.
[Fig. 10] Fig. 10 is a schematic diagram illustrating another configuration of the heat exchanger of the refrigeration cycle apparatus according to Embodiment 1 of the present invention.
[Fig. 11] Fig. 11 is a schematic diagram illustrating a configuration of a heat exchanger of a refrigeration cycle apparatus according to Embodiment 2 of the present invention.
[Fig. 12] Fig. 12 is a circuit block diagram of the refrigeration cycle apparatus according to Embodiment 2 of the present invention.

Description of Embodiments

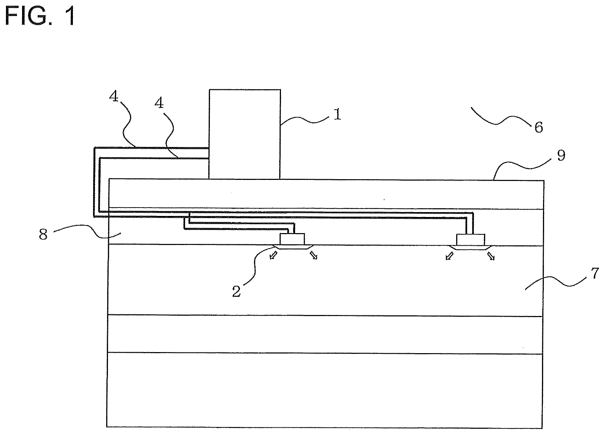

A refrigeration cycle apparatus according to embodiments of the present invention will be described hereinafter with reference to the drawings. In the following drawings including Fig. 1, the same components or equivalent components are denoted by the same reference signs and are common throughout the entire text of the embodiments described below. The forms of the components described in the entire text of the specification are merely exemplary, and the components are not limited to the forms described herein. In particular, combinations of components are not limited to those described in any of the embodiments, and components described in one embodiment may be applied to another embodiment. Furthermore, plural units of the same components distinguished by subscripts may be described without the subscripts when there is no need to distinguish or identify the units from one another. Also, in the drawings, components may not be shown in their actual size relations. Besides, magnitudes of temperature, pressures, and other parameters are not determined in relation to absolute values, but are determined on a relative basis depending on conditions, operations, and other factors of systems and apparatuses.

Embodiment 1

Embodiment 1 of the present invention will be described with reference to drawings. Fig. 1 is a schematic diagram illustrating an installation example of a refrigeration cycle apparatus according to Embodiment 1 of the present invention. By constructing a refrigerant circuit configured to circulate refrigerant and using a refrigeration cycle of the refrigerant, the refrigeration cycle apparatus shown in Fig. 1 allows either a cooling mode or a heating mode to be selected as an operation mode. Here, the refrigeration cycle apparatus according to Embodiment 1 will be described by taking as an example an air-conditioning apparatus configured to air-condition an air-conditioned space (indoor space 7).

In Fig. 1, the refrigeration cycle apparatus according to Embodiment 1 includes an outdoor unit 1 that is a heat source unit and plural indoor units 2. The outdoor unit 1 and the indoor units 2 are connected with each other by extension pipes (refrigerant pipes) 4 through which refrigerant is allowed to pass and cooling energy or heating energy generated by the outdoor unit 1 are designed to be delivered to the indoor units 2.

The outdoor unit 1 is usually placed in an outdoor space 6 that is a space (e.g., rooftop) outside a building 9 and supplies cooling energy or heating energy to the indoor units 2. Each indoor unit 2 is placed at a position each indoor unit 2 can supply temperature-controlled air to an indoor space 7 that is a space (e.g., a living room) in the building 9 and supplies cooling air or heating air to the indoor space 7, which is an air-conditioned space.

As shown in Fig. 1, in the refrigeration cycle apparatus according to Embodiment 1, the outdoor unit 1 and each indoor unit 2 are connected with each other using the two extension pipes 4.

Note that although Fig. 1 shows an example in which the indoor unit 2 is a ceiling cassette type, the present invention is not limited to this configuration. Any type of indoor unit, such as a ceiling concealed type and ceiling suspended type, may be used as long as the indoor unit is designed to be able to send heating air or cooling air into the indoor space 7 either directly or via a duct or other components.

Although Fig. 1 shows an example in which the outdoor unit 1 is installed in the outdoor space 6, the present invention is not limited to this configuration. For example, the outdoor unit 1 may be installed in a walled-in space, such as a machine room, provided with a vent. Also, when waste heat can be discharged out of the building 9 through an exhaust duct, the outdoor unit 1 may be installed inside the building 9. Furthermore, a water-cooled outdoor unit 1 may be installed inside the building 9. Wherever the outdoor unit 1 may be installed, no particular problem arises.

Also, the numbers of outdoor units 1 and indoor units 2 to be connected are not limited to those illustrated in Fig. 1, and may be determined depending on the building 9 in which the refrigeration cycle apparatus according to Embodiment 1 is installed.

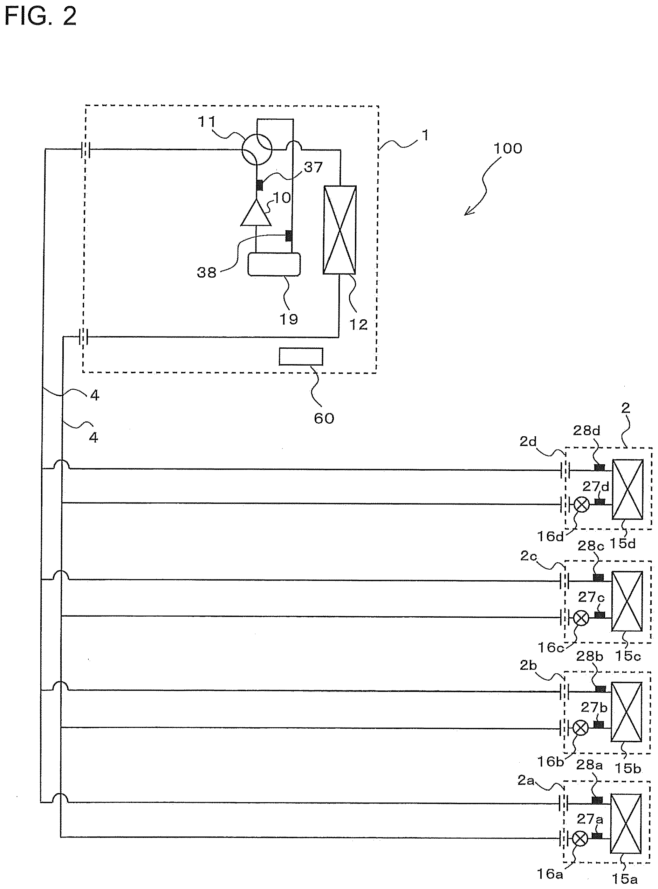

Fig. 2 is a circuit block diagram illustrating an example of a circuit configuration of the refrigeration cycle apparatus (hereinafter referred to as the refrigeration cycle apparatus 100) according to Embodiment 1 of the present invention. Detailed configuration of the refrigeration cycle apparatus 100 will be described with reference to Fig. 2. As shown in Fig. 2, the outdoor unit 1 and the indoor units 2 are connected with each other via extension pipes (refrigerant pipes) 4 through which the refrigerant flows.

[Outdoor unit 1]

The outdoor unit 1 is equipped with a compressor 10, a first refrigerant flow switching device 11 such as a four-way valve, a heat source side heat exchanger 12, and an accumulator 19 that are connected in series via refrigerant pipes.

The compressor 10, which sucks refrigerant and compresses the refrigerant into a high-temperature, high-pressure state, is preferred to be, for example, of a capacity-controllable inverter compressor. The first refrigerant flow switching device 11 switches between refrigerant flow during heating operation and refrigerant flow during cooling operation. The heat source side heat exchanger 12 acts as an evaporator during heating operation and acts as a condenser (or radiator) during cooling operation. The heat source side heat exchanger 12 serving as a first heat exchanger exchanges heat between air supplied from a fan (not illustrated) and the refrigerant and evaporates and gasifies or condenses and liquefies the refrigerant. The heat source side heat exchanger 12 acts as a condenser during cooling operation for the indoor space 7 and acts as an evaporator during heating operation for the indoor space 7. The accumulator 19 is installed on a suction side of the compressor 10 and accumulates surplus refrigerant produced by changes in operation mode or other factors in the refrigerant circuit.

The outdoor unit 1 includes the compressor 10, the first refrigerant flow switching device 11, the heat source side heat exchanger 12, the accumulator 19, a high-pressure detector 37, a low-pressure detector 38, and a controller 60. Also, the compressor 10 has, for example, a compression chamber in an airtight container, and may have a low-pressure shell structure in which a low-pressure refrigerant atmosphere prevails in the airtight container and that compresses low-pressure refrigerant sucked from the airtight container or a high-pressure shell structure in which a high-pressure refrigerant atmosphere prevails in the airtight container and that discharges high-pressure refrigerant compressed in the compression chamber into the airtight container. Also, the outdoor unit 1 includes the controller 60, and controls components based on detection information from various detectors, instructions from a remote control and other factors. The controller 60 is designed to control, for example, driving frequency of the compressor 10, rotation speed (including turning on and off) of the fan, switching of the first refrigerant flow switching device 11, and other operations and run various operation modes described later. The controller 60 according to Embodiment 1 is a microcomputer or another computer equipped, for example, with a control arithmetic processing unit such as a CPU (Central Processing Unit). Also, the controller 60 includes a storage unit (not illustrated) and contains data obtained by incorporating processing procedures related to control and other operations into a program. Then, the control arithmetic processing unit performs processing based on program data and thereby implements control.

[Indoor unit 2]

Each indoor unit 2 is equipped with a load side heat exchanger 15 serving as a second heat exchanger. The load side heat exchanger 15 is designed to be connected with the outdoor unit 1 via the extension pipes 4. The load side heat exchanger 15 exchanges heat between air supplied from a fan (not illustrated) and the refrigerant and generates heating air or cooling air to be supplied to the indoor space 7. The load side heat exchanger 15 acts as a condenser during heating operation for the indoor space 7. On the other hand, during cooling operation for the indoor space 7, the load side heat exchanger 15 acts as an evaporator.

Fig. 2 shows an example in which four indoor units 2 are connected and illustrates an indoor unit 2a, an indoor unit 2b, an indoor unit 2c, an indoor unit 2d, in this order from the bottom of Fig. 2. Also, the load side heat exchangers 15 corresponding to the indoor units 2a to 2d are illustrated as a load side heat exchanger 15a, a load side heat exchanger 15b, a load side heat exchanger 15c, a load side heat exchanger 15d, in this order from the bottom of Fig. 2. Note that as with Fig. 1, the number of indoor units 2 to be connected is not limited to four as illustrated in Fig. 2.

Operation modes performed by the refrigeration cycle apparatus 100 will be described. The refrigeration cycle apparatus 100 sets operation mode of the outdoor unit 1 to either cooling operation mode or heating operation mode based on instructions from the indoor units 2. That is, the refrigeration cycle apparatus 100 can perform the same operation (cooling operation or heating operation) on all the indoor units 2 and thereby regulate a temperature in a room. Note that in both cooling operation mode and heating operation mode, each indoor unit 2 can be operated and stopped freely.

The operation modes performed by the refrigeration cycle apparatus 100 includes the cooling operation mode in which all the running indoor units 2 perform cooling operation (stopping the cooling operation is included) and the heating operation mode in which all the running indoor units 2 perform heating operation (stopping the cooling operation is included). Each of the operation modes will be described below together with flows of refrigerant.

[Cooling operation mode]

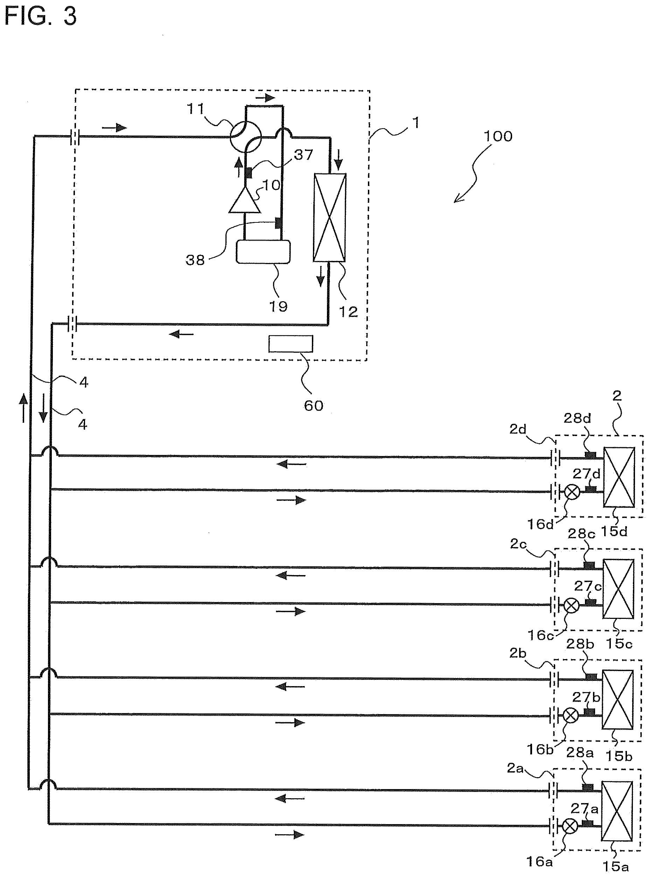

Fig. 3 is a refrigerant circuit diagram illustrating flows of refrigerant in the cooling operation mode when discharge temperature of the refrigeration cycle apparatus 100 is low. In Fig. 3, the cooling operation mode will be described by taking as an example a case in which a cooling load is generated in each load side heat exchanger 15. Note that in Fig. 3, the thick lines indicate pipes through which the refrigerant flows and that the solid arrows indicate directions of refrigerant flow.

In the cooling operation mode shown in Fig. 3, the outdoor unit 1 switches the first refrigerant flow switching device 11 so that the refrigerant discharged from the compressor 10 flows into the heat source side heat exchanger 12. Low-temperature, low-pressure refrigerant is compressed by the compressor 10 and discharged as high-temperature, high-pressure gas refrigerant. The high-temperature, high-pressure gas refrigerant discharged from the compressor 10 flows into the heat source side heat exchanger 12 through the first refrigerant flow switching device 11. Then, the refrigerant condenses and liquefies while transferring heat to outdoor air in the heat source side heat exchanger 12 and flows out of the outdoor unit 1 as high-pressure liquid refrigerant.

The high-pressure liquid refrigerant flowing out of the outdoor unit 1 flows into each of the indoor units 2 (2a to 2d) through the extension pipes 4. The high-pressure liquid refrigerant flowing into the indoor units 2 (2a to 2d) flows into expansion devices 16 (16a to 16d) and then becomes low-temperature, low-pressure, two-phase refrigerant by being throttled to be depressurized by the expansion devices 16 (16a to 16d). Furthermore, the refrigerant flows into each of the load side heat exchangers 15 (15a to 15d) acting as evaporators, receives heat from the air flowing around the load side heat exchangers 15, and thereby becomes low-temperature, low-pressure, gas refrigerant. Then, the low-temperature, low-pressure, gas refrigerant flows out of the indoor units 2 (2a to 2d), flows into the outdoor unit 1 again through the extension pipes 4, passes through the first refrigerant flow switching device 11, and is sucked into the compressor 10 again through the accumulator 19.

At this time, opening degrees (opening areas) of the expansion devices 16a to 16d are controlled so that a temperature difference (degree of superheat) between a detected temperature of a load side heat exchanger gas refrigerant temperature detector 28 and an evaporating temperature transmitted to a controller (not illustrated) of each indoor unit 2 from the controller 60 of the outdoor unit 1 through communication approaches a target value.

Note that in the cooling operation mode, no refrigerant is needed to be sent to these load side heat exchangers 15 that are free from heat loads (the load side heat exchangers 15 in a thermostat-off state are included), and thus operations of such heat exchangers are stopped. At this time, the expansion devices 16 corresponding to the stopped indoor units 2 are set to be fully closed or to have such a small opening degree that the refrigerant does not flow.

[Heating operation mode]

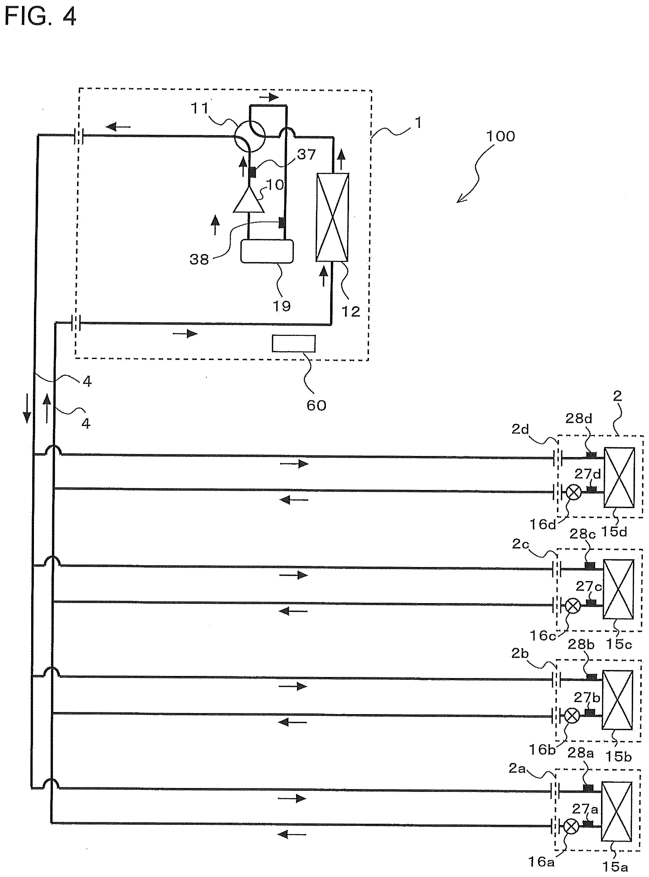

Fig. 4 is a refrigerant circuit diagram illustrating flows of refrigerant in the heating operation mode of the refrigeration cycle apparatus 100. In Fig. 4, the heating operation mode will be described by taking as an example a case in which a heating load is generated in each load side heat exchanger 15. Note that in Fig. 4, the thick lines indicate pipes through which the refrigerant flows and that the solid arrows indicate directions of refrigerant flow.

In the heating operation mode shown in Fig. 4, the outdoor unit 1 switches the first refrigerant flow switching device 11 so that the refrigerant discharged from the compressor 10 flows into the indoor units 2 without passing through the heat source side heat exchanger 12. Low-temperature, low-pressure refrigerant is compressed by the compressor 10, discharged as high-temperature, high-pressure gas refrigerant, and flows out of the outdoor unit 1 by passing through the first refrigerant flow switching device 11. The high-temperature, high-pressure gas refrigerant flowing out of the outdoor unit 1 flows into each of the indoor units 2 (2a to 2d) through the extension pipes 4. The high-temperature, high-pressure gas refrigerant flowing into the indoor units 2 (2a to 2d) flows into the respective load side heat exchangers 15 (15a to 15d), condenses and liquefies by transferring heat to the air flowing around the load side heat exchangers 15 (15a to 15d) and thereby becomes high-temperature, high-pressure liquid refrigerant. The high-temperature, high-pressure liquid refrigerant flowing out of the load side heat exchangers 15 (15a to 15d) flows into the expansion devices 16 (16a to 16d), becomes low-temperature, low-pressure, two-phase refrigerant by being throttled by the expansion devices 16 (16a to 16d) to be depressurized, and flows out of the indoor units 2 (2a to 2d). The low-temperature, low-pressure, two-phase refrigerant flowing out of the indoor units 2 flows into the outdoor unit 1 again through the extension pipes 4.

At this time, opening degrees (opening areas) of the expansion devices 16a to 16d are controlled so that a temperature difference (degree of subcooling) between a condensing temperature transmitted to a controller (not illustrated) of each indoor unit 2 from the controller 60 of the outdoor unit 1 through communication and a detected temperature of a load side heat exchanger liquid refrigerant temperature detector 27 approaches a target value.

The low-temperature, low-pressure, two-phase refrigerant flowing into the outdoor unit 1 flows into the heat source side heat exchanger 12, receives heat from the air flowing around the heat source side heat exchanger 12, and evaporates to become low-temperature, low-pressure, gas refrigerant or low-temperature, low-pressure, two-phase refrigerant of high quality. (A dryness of refrigerant is referred to as a quality in this description.) The low-temperature, low-pressure, gas refrigerant or two-phase refrigerant is sucked into the compressor 10 again through the first refrigerant flow switching device 11 and the accumulator 19.

In the heating operation mode, no refrigerant is needed to be sent to the load side heat exchangers 15 that are free from heat loads (the load side heat exchangers 15 in a thermostat-off state are included). However, in the heating operation mode, when the expansion devices 16 corresponding to the load side heat exchangers 15 free from heating loads are set to be fully closed or to have such a small opening degree that the refrigerant does not flow, the refrigerant condenses by being cooled by ambient air and collect in the load side heat exchangers 15 that are not operating and the refrigerant circuit as a whole may run short of refrigerant. Thus, during heating operation, the expansion devices 16 corresponding to the load side heat exchangers 15 free from heat loads are set to have a large opening degree (opening area) such as a fully opened degree to prevent the refrigerant from collecting.

Also, a four-way valve is generally used as the first refrigerant flow switching device 11, but the present invention is not limited to this configuration. Plural two-way flow switching valves or three-way flow switching valves may be used to cause the refrigerant to flow similarly to the description above.

Also, whereas description has been given here of a case in which the accumulator 19 is provided to accumulate surplus refrigerant in the refrigerant circuit, when the extension pipes 4 are short or when only a single indoor unit 2 is installed, no accumulator 19 is needed to be installed because the amount of surplus refrigerant is small.

As described above, with the refrigeration cycle apparatus 100, when the indoor units 2 are performing cooling operation, low-temperature, low-pressure, two-phase refrigerant flows into the load side heat exchangers 15 (15a to 15d) to evaporate and gasify and flows out of the load side heat exchangers 15 (15a to 15d) as low-temperature, low-pressure, gas refrigerant. Also, when the indoor units 2 are performing heating operation, high-temperature, high-pressure gas refrigerant flows into the load side heat exchangers 15 (15a to 15d). The refrigerant flowing into the load side heat exchangers 15 (15a to 15d) condenses to become two-phase refrigerant, liquefies, and flows out of the load side heat exchangers 15 (15a to 15d) as high-temperature, high-pressure liquid refrigerant.

Also, in the cooling operation mode, high-temperature, high-pressure gas refrigerant flows into the heat source side heat exchanger 12, condenses to become two-phase refrigerant, liquefies, and flows out as high-temperature, high-pressure liquid refrigerant. Also, in the heating operation mode, low-temperature, low-pressure, two-phase refrigerant flows into the heat source side heat exchanger 12, evaporates, and flows out as low-temperature, low-pressure, two-phase refrigerant of high quality.

[Types of refrigerant]

When a substance such as R32 and R410A normally used as refrigerant is used as refrigerant in the refrigeration cycle apparatus 100, the substance such as R32 and R410A can be used as it is in the usual way without taking measures to improve stability of the refrigerant in the refrigerant circuit. However, it is assumed that the refrigerant used here is a single component refrigerant of a substance having the property of undergoing disproportionation reaction or a mixed refrigerant containing a substance having the property of undergoing disproportionation reaction and another substance, where examples of the substance having the property of undergoing disproportionation reaction include 1,1,2-trifluoroethylene (HFO-1123) expressed by $C_2H_1F_3$ and provided with one double bond in its molecular structure.

Examples of the substance having the property of undergoing disproportionation reaction to be mixed to produce the mixed refrigerant include tetrafluoropropene expressed by $C_3H_2F_4$ (such as HFO-1234yf that is 2,3,3,3-tetrafluoro-propene expressed by $CF_3CF=CH_2$ and HFO-1234ze that is 1,3,3,3-tetrafluoro-1-propene expressed by $CF_3CH=CHF$) and difluoromethane (HFC-32) whose chemical formula is $CH_2F_2$. However, the substance mixed with the substance having the property of undergoing disproportionation reaction is not limited to these substances, and may be HC-290 (propane) or another similar substance. Any substance may be used as long as the substance has sufficient thermal performance to be used as refrigerant in the refrigeration cycle apparatus 100. Also, any mixture ratio may be used.

As described above, when the substance having the property of undergoing disproportionation reaction is used as it is as refrigerant, the substance presents the following problems. That is, in a state where adjacent chemical species in a liquid, two-phase, or similar state are located very close to each other, when some kind of strong energy is applied to the refrigerant, the adjacent species react with each other and thereby change into other substances, ceasing to serve as refrigerant. Moreover, sudden pressure rises due to heat generation may cause an accident such as a pipe rupture. Thus, to use a substance having the property of undergoing disproportionation reaction as refrigerant, a solution is necessary to prevent the disproportionation reaction in a liquid part or a two-phase part in which a gas and liquid are mixed. Here, collision energy resulting from a collision between the refrigerant and components can also be a factor contributing to disproportionation reaction of the refrigerant. Thus, when components of the refrigerant circuit are structured to reduce collision energy, disproportionation reaction is less likely to occur.

[Heat source side heat exchanger 12 or load side heat exchangers 15 (15a to 15d)]

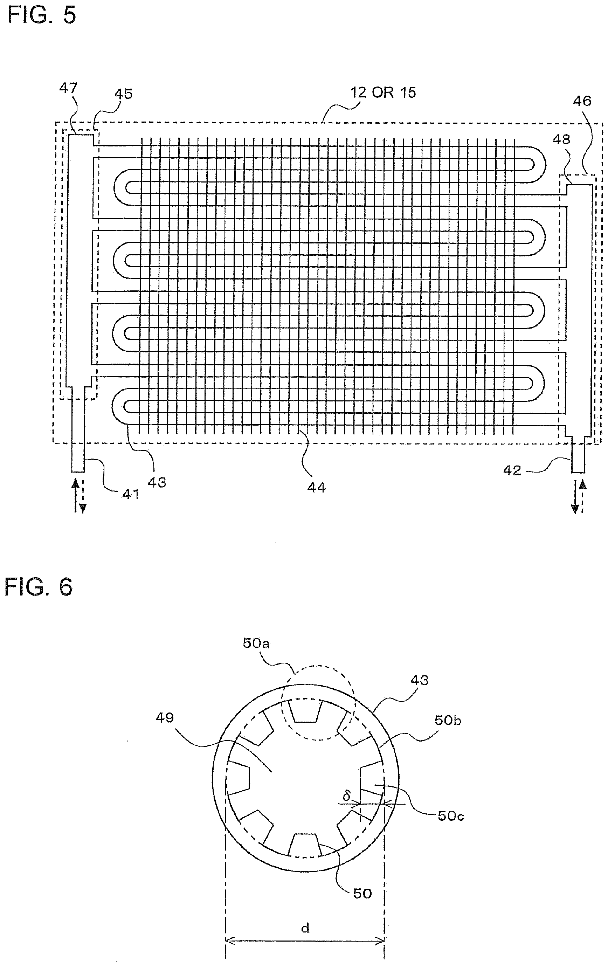

Fig. 5 is a schematic diagram illustrating a configuration of a heat exchanger of a plate fin tube type used for the heat source side heat exchanger 12, load side heat exchangers 15 (15a to 15d), and other heat exchangers. In Fig. 5, the plate fin tube heat exchanger (12 or 15) includes a first connecting pipe 41, a second connecting pipe 42, heat transfer tubes 43 configured to exchange heat between ambient air that is a heat medium and the internal refrigerant, fins 44, a first distribution unit 45, and a second distribution unit 46.

A configuration of the heat exchanger (12 or 15) will be described in more detail. The heat exchanger (12 or 15) is configured so that plural fins 44 are arranged at intervals and plural heat transfer tubes 43 penetrate the plural fins 44. The plural heat transfer tubes 43 are connected at one of opposite ends to the first distribution unit 45 and connected at the other end to the second distribution unit 46. Also, the first connecting pipe 41 and the second connecting pipe 42 serving as an inlet and an outlet for the refrigerant from and to other components in the refrigeration cycle are connected to the first distribution unit 45 and the second distribution unit 45.

The first distribution unit 45 and the second distribution unit 46 are configured to distribute the refrigerant flowing in from the first connecting pipe 41 and the second connecting pipe 42 to the heat transfer tubes 43. In the example of Fig. 5, the first distribution unit 45 is made up of one first distribution header 47 and the second distribution unit 46 is made up of one second distribution header 48.

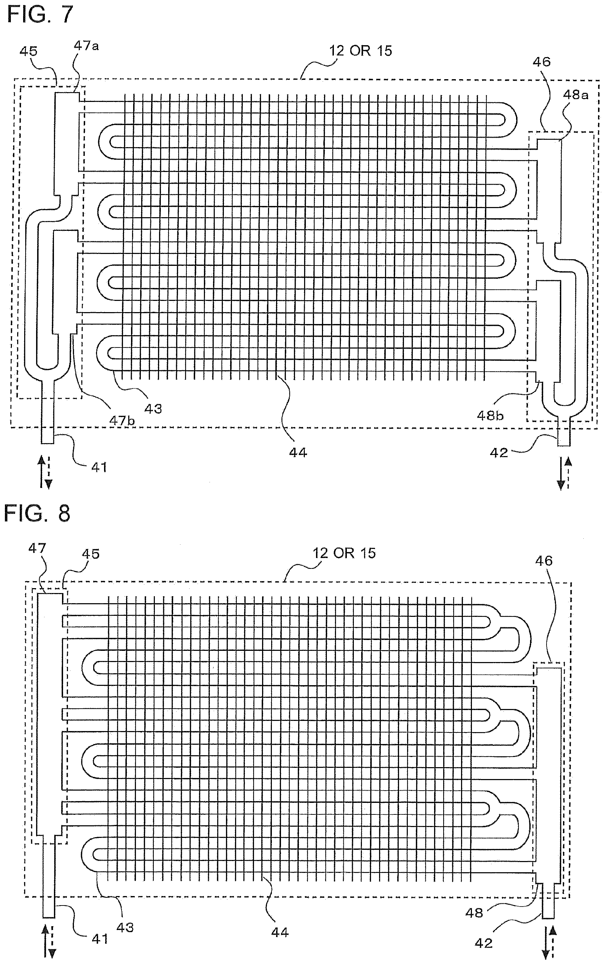

In Fig. 5, the solid arrows indicate directions of refrigerant flow when the heat exchanger (12 or 15) is acting as a condenser and dashed arrows indicate directions of refrigerant flow when the heat exchanger (12 or 15) is acting as an evaporator. Such arrow indications similarly apply to Figs. 7 and 8 described later.

When the heat exchanger (12 or 15) acts as a condenser, high-temperature, high-pressure gas refrigerant flows into the heat exchanger (12 or 15). The high-temperature, high-pressure gas refrigerant flowing into the heat exchanger (12 or 15) condenses to become two-phase refrigerant in which a gas and liquid are mixed, liquefies, and flows out of the heat exchanger (12 or 15) as high-temperature, high-pressure liquid refrigerant. Also, when the heat exchanger (12 or 15) acts as an evaporator, low-temperature, low-pressure, two-phase refrigerant of low quality flows into the heat exchanger (12 or 15), evaporates, and flows out of the heat exchanger (12 or 15) as high-quality, two-phase refrigerant or gas refrigerant.

In the heat exchanger (12 or 15), to enhance heat transfer of refrigerant flowing through the heat transfer tubes 43 and improve a heat transfer coefficient, grooving is usually applied to an inner surface (heat transfer surface) of each of the heat transfer tubes 43.

Fig. 6 is a schematic cross-sectional view of a configuration example in which grooving is applied to the inner surface (heat transfer surface) of the heat transfer tube used for the heat exchanger of the refrigeration cycle apparatus according to Embodiment 1 of the present invention.

Inner part of the heat transfer tube 43 provides a passage 49 through which the refrigerant flows. Plural grooves 50 are formed at circumferential intervals in the inner surface of the heat transfer tube 43, extending in a tube axis direction and making the inner surface of the heat transfer tube 43 to be a concavo-convex surface 50a. When the concavo-convex surface 50a is formed by grooving the inner surface of the heat transfer tube 43, a boundary layer of the refrigerant is disturbed under the influence of the concavo-convex surface 50a, increasing intensity of turbulence of the refrigerant.

The refrigerant flows through the heat transfer tube 43 with its flow speed increased in concave portions 50b of the concavo-convex surface 50a in the heat transfer tube 43 while repeating collisions with convex portions 50c. Consequently, generally, when the inner surface of the heat transfer tube 43 is grooved, not only the heat transfer coefficient but also pressure loss of the refrigerant increase. Thus, the grooves 50 in the heat transfer tube 43 of the heat exchanger (12 or 15) can be a contributing factor in causing the refrigerant to undergo disproportionation reaction. The grooves 50 in the heat transfer tube 43 are often formed into a shape (e.g., a helical shape extending in the tube axis direction) increasing the effect of disturbing the refrigerant flow, and in this case, the effect is further increased. Note that Fig. 6 is an example of grooving and the shape is not limited to this example. Also, the grooves 50 do not have to be helical, and any shape results in a similar situation as long as a concavo-convex surface 50a is formed in the inner surface of the heat transfer tube 43 and is shaped to disturb the flow of refrigerant.

Collision energy between the refrigerant and the convex portions 50c of the concavo-convex surface 50a on an inner surface of the heat exchanger (12 or 15) can be determined by Formula (1).

[Formula 1]

$$\text{Collision energy} = \text{mass of refrigerant} \times \text{speed variation of refrigerant}$$

$$= (\text{mass flow rate of refrigerant} \times \text{unit time}) \times \text{speed variation of refrigerant} \qquad (1)$$

The higher the refrigerant speed, the greater the speed variation of the refrigerant when the refrigerant is braked by an obstacle. Also, refrigerant flow is disturbed more greatly in the grooved heat exchanger (12 or 15) than in a smooth tube with a same internal cross sectional area without grooves 50 in the inner surface of the heat transfer tube 43 and thus disproportionation reaction is likely to occur.

When the heat exchanger (12 or 15) shown in Fig. 5 acts as a condenser, high-temperature, high-pressure gas refrigerant flows into the heat transfer tubes 43 from the first connecting pipe 41 through the first distribution header 47. The high-temperature, high-pressure gas refrigerant flowing into the heat transfer tubes 43 exchanges heat with a heat medium such as ambient air inside the heat transfer tubes 43 by the effects of the fins 44, condenses to become two-phase refrigerant in which a gas and liquid are mixed, liquefies, and thereby becomes high-temperature, high-pressure liquid refrigerant. The high-temperature, high-pressure liquid refrigerant flows out of the second connecting pipe 42 through the second distribution header 48.

Also, when the heat exchanger (12 or 15) acts as an evaporator, low-temperature, low-pressure, two-phase refrigerant of low quality flows into the heat transfer tubes 43 from the second connecting pipe 42 through the second distribution header 48. The low-temperature, low-pressure, two-phase refrigerant of low quality flowing into the heat transfer tubes 43 exchanges heat with a heat medium such as ambient air inside the heat transfer tubes 43 by the effect of the fins 44, evaporates, and becomes low-temperature, low-pressure, two-phase refrigerant of high quality or low-temperature, low-pressure, gas refrigerant. The low-temperature, low-pressure, two-phase refrigerant of high quality or low-temperature, low-pressure, gas refrigerant flows out of the first connecting pipe 41 through the first distribution header 47. The first connecting pipe 41 and the second connecting pipe 42 are connecting pipes intended to connect the heat exchanger (12 or 15) with other components and are made of smooth tubes (circular tubes) whose inner surfaces are smooth.

Here, magnitude relationships of refrigerant densities depending on the states of refrigerant are as follows:

- high-pressure refrigerant > low-pressure refrigerant
- liquid refrigerant > gas refrigerant, two-phase refrigerant

• low-quality two-phase refrigerant > high-quality two-phase refrigerant

Because a higher refrigerant density results in a lower pressure loss in a pipe, a high-pressure pipe causes a lower pressure loss than a low-pressure pipe, and thus a pipe through which liquid refrigerant flows can be made thinner than a pipe through which gas refrigerant flows. Also, a pipe through which low-quality two-phase refrigerant flows can be made thinner than a pipe through which high-quality refrigerant flows.

Here, as described above, the refrigerant passing through the first connecting pipe 41 is "high-temperature, high-pressure gas refrigerant" or "low-temperature, low-pressure, two-phase refrigerant of high quality or low-temperature, low-pressure, gas refrigerant" while the refrigerant passing through the second connecting pipe 42 is "high-temperature, high-pressure liquid refrigerant" or "low-temperature, low-pressure refrigerant of low quality." Consequently, pressure losses are taken into consideration, and thus usually a thinner pipe is used for the second connecting pipe 42 than for the first connecting pipe 41. Note that using pipes of same thickness may be preferable in commonality of parts. Thus, instead of making the second connecting pipe 42 thinner than the first connecting pipe 41, pipes of the same thickness may be used for the first connecting pipe 41 and the second connecting pipe 42.

Usually, to increase a heat transfer area of a heat exchanger on each path (passage), one heat exchanger (12 or 15) is often constructed by connecting plural heat transfer tubes 43 to the first connecting pipe 41 and the second connecting pipe 42. With this configuration, when the density of the refrigerant remains constant without any change, disproportionation reaction of the refrigerant is likely to occur depending on relationships among internal cross sectional areas of the heat transfer tube 43, the first connecting pipe 41, and the second connecting pipe 42. That is, when a total cross sectional area of internal cross sectional areas of the heat transfer tubes 43 on all paths is smaller than an internal cross sectional area of the first connecting pipe 41 or an internal cross sectional area of the second connecting pipe 42, refrigerant speed in the heat transfer tubes 43 becomes higher than refrigerant speed in the first connecting pipe 41 or the second connecting pipe 42. Consequently, disproportionation reaction of the refrigerant is likely to occur due to energy of collisions with obstacles.

For maximum safety, when the total cross sectional area of the internal cross sectional areas of the heat transfer tubes 43 on all the paths is set larger than both internal cross sectional area of the first connecting pipe 41 and internal cross sectional area of the second connecting pipe 42, disproportionation reaction is less likely to occur. That is, when the total cross sectional area of the internal cross sectional areas of the heat transfer tubes 43 on all the paths is set larger than the internal cross sectional area of the thicker of the first connecting pipe 41 and the second connecting pipe 42 or larger than the internal cross sectional area of both first connecting pipe 41 and second connecting pipe 42 when the two connecting pipes are equal in thickness, disproportionation reaction is less likely to occur. However, even when the total cross sectional area of the internal cross sectional areas of the heat transfer tubes 43 on all the paths is not made that large, disproportionation reaction can be made less likely to occur when the following relationship is satisfied.

As mentioned above, states of refrigerant where disproportionation reaction is likely to occur are the liquid state and the low quality two-phase state. Thus, the refrigerant has low pressure losses in liquid state and in low-quality two-phase state, and thus the pipe (second connecting pipe 42) in which the refrigerant flows in these states is generally configured to be thinner than the first connecting pipe 41 as described above. Consequently, the refrigerant in a state where disproportionation reaction is likely to occur passes through thin pipes (the second connecting pipe 42 or the heat transfer tubes 43 connected with the second connecting pipe 42 through the second distribution unit 46). Thus, when the total cross sectional area of the internal cross sectional areas of the heat transfer tubes 43 on all the paths is set larger than the smaller of the internal cross sectional area of the first connecting pipe 41 and the internal cross sectional area of the second connecting pipe 42, i.e., the internal cross sectional area of the second connecting pipe 42, at a minimum, disproportionation reaction is less likely to occur. In short, when the total cross sectional area of the internal cross sectional areas of the heat transfer tubes 43 on all the paths is set larger than the internal cross sectional area of at least one of the first connecting pipe 41 and the second connecting pipe 42, disproportionation reaction can be controlled.

Note that the first connecting pipe 41 and an external refrigerant pipe connected to the first connecting pipe 41 are substantially equal in pipe diameter, and that the second connecting pipe 42 and an external refrigerant pipe connected to the second connecting pipe 42 are substantially equal in pipe diameter. Thus, the configuration in which the total cross sectional area of the internal cross sectional areas of the heat transfer tubes 43 on all the paths is set larger than the internal cross sectional area of at least one of the first connecting pipe 41 and the second connecting pipe 42 can be described in another configuration as follows. That is, the total cross sectional area of the internal cross sectional areas of the heat transfer tubes 43 on all the paths is set larger than an internal cross sectional area of an external refrigerant pipe connected to at least one of the first connecting pipe 41 and the second connecting pipe 42.

In Fig. 5, the paths are four, and four heat transfer tubes 43 are connected to the first connecting pipe 41 and the second connecting pipe 42 through the first distribution unit 45 and the second distribution unit 46, making up a single heat exchanger (12 or 15). Thus, when the total cross sectional area of the internal cross sectional areas of the four heat transfer tubes 43 is set larger than the smaller of the internal cross sectional area of the first connecting pipe 41 and the internal cross sectional area of the second connecting pipe 42, i.e., the internal cross sectional area of the second connecting pipe 42, disproportionation reaction is less likely to occur.

For example, an inside diameter of the heat transfer tube 43 is assumed to be 7.44 mm when an inside diameter of the first connecting pipe 41 is 17.05 mm, and an inside diameter of the second connecting pipe 42 is 8.12 mm. In this case, when the refrigerant pipe is divided by the second distribution unit 46 into the number of paths larger than 1.2 that is the quotient obtained by dividing the internal cross sectional area of the second connecting pipe 42 by the internal cross sectional area of the heat transfer tubes 43, i.e., the integral number of paths equal to or larger than 2, the total cross sectional area of the internal cross sectional areas of all the heat transfer tubes 43 becomes larger than the internal cross sectional area of the second connecting pipe 42. Also, when the inside diameter of the heat transfer tube 43 is 4.5 mm and the refrigerant pipe is divided by the second distribution unit 46 into the number of paths larger than 3.3 that is the quotient obtained by dividing the internal cross sectional area of the second connecting pipe 42 by the internal cross sectional area of the heat transfer tubes 43, i.e., the integral number of paths equal to or larger than 4, the total cross sectional area of the internal cross sectional areas of the heat transfer tubes 43 becomes larger than the internal cross sectional area of the second connecting pipe 42, and thus disproportionation reaction is less likely to occur.

Note that the inside diameter of the heat transfer tube 43 here means a diameter (d in Fig. 6) based on the concave portions 50b of the concavo-convex surface 50a of the heat transfer tube 43. In other words, the inside diameter of the heat transfer tube 43 means a diameter of a circle inscribed inside bottoms of the plural concave portions 50b. The internal cross sectional area of the heat transfer tube 43 is equivalent to an area of a circle whose diameter (d in Fig. 6) is based on the concave portions 50b of the concavo-convex surface 50a of the heat transfer tube 43.

Note that whereas Fig. 5 shows a case in which four heat transfer tubes 43 are connected to the first connecting pipe 41 and the second connecting pipe 42, making up a single heat exchanger (12 or 15), the number of the paths of the heat transfer tubes 43 making up one heat exchanger is not limited to four. For example, one heat transfer tube 43 may be connected to the first connecting pipe 41 and the second connecting pipe 42, making up a single heat exchanger (12 or 15) in a single-path configuration. Even in the case of a single path, when the internal cross sectional area of the single heat transfer tube 43 is configured to be larger than the smaller of the internal cross sectional area of the first connecting pipe 41 and the internal cross sectional area of the second connecting pipe 42, i.e., the internal cross sectional area of the second connecting pipe 42, disproportionation reaction is less likely to occur.

Fig. 7 is a schematic diagram illustrating another configuration of the heat exchanger of the refrigeration cycle apparatus according to Embodiment 1 of the present invention.

The heat exchanger (12 or 15) in Fig. 7 is configured so that each of the first distribution unit 45 and the second distribution unit 46 is equipped with plural distribution headers. Specifically, the first distribution unit 45 includes a first distribution header 47a and a first distribution header 47b. The first connecting pipe 41 is divided into two portions, i.e., as many portions as distribution headers are provided, and one of the portions is connected to the first distribution header 47a and the other portion is connected to the first distribution header 47b. Each of the first distribution header 47a and the first distribution header 47b is connected to two heat transfer tubes 43.

Also, the second distribution unit 46 similarly includes a second distribution header 48a and a second distribution header 48b. The second connecting pipe 42 is divided into two portions, i.e., as many portions as distribution headers are provided, and one of the portions is connected to the second distribution header 48a and the other portion is connected to the second distribution header 48b. Each of the second distribution header 47a and second distribution header 47b is connected to two heat transfer tubes 43.

Even in a heat exchanger structure in which the first connecting pipe 41 and the second connecting pipe 42 are each divided into plural portions (two in this case) in the first distribution unit 45 and the second distribution unit 46 and the plural portions are connected to respective heat transfer tubes 43 as with the configuration described above, when a configuration similar to the one described earlier is used regarding the internal area, disproportionation reaction is less likely to occur. In the heat exchanger structure of Fig. 7, the passage is divided into two portions in each of the first distribution unit 45 and the second distribution unit 46 and each of the two portions is connected to two heat transfer tubes 43, resulting in a four-path configuration. Thus, when the total internal cross sectional area of the internal cross sectional areas of the four heat transfer tubes 43 is configured to be larger than the smaller of the internal cross sectional area of the first connecting pipe 41 and the internal cross sectional area of the second connecting pipe 42, i.e., the internal cross sectional area of the second connecting pipe 42, disproportionation reaction is less likely to occur.

Fig. 8 is a schematic diagram illustrating another configuration of the heat exchanger of the refrigeration cycle apparatus according to Embodiment 1 of the present invention.

The heat exchanger (12 or 15) in Fig. 8 is a 1-2 path heat exchanger in which the number of paths changes in the middle of a passage. In Fig. 8, the first connecting pipe 41 is connected to the first distribution header 47, which branches into six paths and two paths each merge together midway to halve the number of paths. Also, the second connecting pipe 42 is connected to the second distribution header 48, which is connected to three heat transfer tubes 43. That is, the heat transfer tubes 43 on six paths are connected to the first connecting pipe 41 through the first distribution unit 45 and the heat transfer tubes 43 on three paths are connected to the second connecting pipe 42 through the second distribution unit 46.

For maximum safety, the 1-2 path configuration described above is preferred to be arranged as follows. That is, the total cross sectional area of the internal cross sectional areas of the three heat transfer tubes 43 on the side of the second connecting pipe 42 having a smaller number of paths than that on the side of the first connecting pipe 41 is preferred to be set larger than the smaller of the internal cross sectional area of the first connecting pipe 41 and the internal cross sectional area of the second connecting pipe 42, i.e., the internal cross sectional area of the second connecting pipe 42 to make disproportionation reaction less likely to occur.

However, the following configuration, at a minimum, has an effect to some extent to control disproportionation reaction on the side having the larger number of paths. That is, when the total cross sectional area of the internal cross sectional areas of the six heat transfer tubes 43 on the side of the first connecting pipe 41 having the number of paths larger than that of the side of the second connecting pipe 42 is configured to be larger than the smaller of the internal cross sectional area of the first connecting pipe 41 and the internal cross sectional area of the second connecting pipe 42, i.e., the internal cross sectional area of the second connecting pipe 42, an effect can be made to some extent to control disproportionation reaction on the side with the larger number of paths.

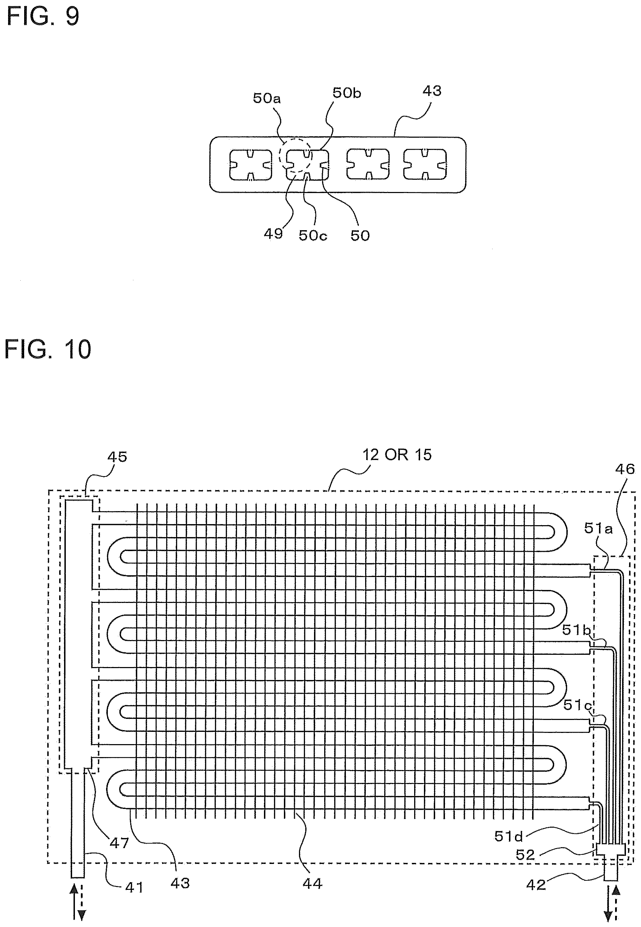

Fig. 9 is a schematic diagram of another heat transfer tube used for the heat exchanger of the refrigeration cycle apparatus according to Embodiment 1 of the present invention.

Fig. 9 shows a flat tube with a flat channel structure whose interior is divided into plural (four in this case) passages 49. To consider the above-mentioned configuration in which disproportionation reaction is less likely to occur in such a case where the flat tube is used for the heat transfer tube 43, the total cross sectional area obtained by adding up cross sectional areas of the passages 49 in a single heat transfer tube 43 is supposed to be the internal cross sectional area of the single heat transfer tube 43. The description will be given below by citing a concrete example.

In Fig. 9, the heat transfer tube 43 is internally divided into four passages 49 and the heat transfer tube 43 is supposed to make up the heat exchanger (12 or 15) of Fig. 5. In the heat exchanger (12 or 15) of Fig. 5, the paths of the four heat transfer tubes 43 are connected to the first connecting pipe 41 through the first distribution unit 45 and the paths of the four heat transfer tubes 43 are connected to the second connecting pipe 42 through the second distribution unit 46. Thus, when all the passages 49 in the heat transfer tube 43 are equal in internal cross sectional area, "the total cross sectional area of the internal cross sectional areas of the heat transfer tubes 43 on all the paths" equals a value obtained by multiplying the number (four in this case) of passages 49 in one heat transfer tube 43, the number (four in this case) of paths of the heat transfer tubes 43, and the internal cross sectional area of each passage 49. When the value obtained by the multiplication is configured to be larger than the smaller of the internal cross sectional area of the first connecting pipe 41 and the internal cross sectional area of the second connecting pipe 42, i.e., the internal cross sectional area of the second connecting pipe 42, disproportionation reaction is less likely to occur.

Note that although description has been given above by taking as an example a case in which all the passages 49 in the heat transfer tube 43 are equal in internal cross sectional area, the present invention is not limited to this configuration, and some of the passages 49 may differ in internal cross sectional area. For example, of the four passages 49 in Fig. 9, the two passages 49 on opposite ends may be configured to differ in internal cross sectional area from the other passages 49. Even in this case, when the total cross sectional area of the internal cross sectional areas of the passages 49 in the heat transfer tubes 43 on all the paths is configured to be larger than the smaller of the internal cross sectional area of the first connecting pipe 41 and the internal cross sectional area of the second connecting pipe 42, i.e., the internal cross sectional area of the second connecting pipe 42, disproportionation reaction is less likely to occur.

Note that, when the heat transfer tube 43 is a flat tube, the passage 49 has a flat shape such as a rectangular shape rather than a circular shape. In this case, the internal cross sectional area of the passage 49 is calculated based on the concave portions 50b of the concavo-convex surface 50a provided on each flat-shaped heat transfer surface. That is, the cross sectional area of the passage 49 is calculated as an internal cross sectional area of the flat shape connecting bottoms of the concave portions 50b.

Fig. 10 is a schematic diagram illustrating another configuration of the heat exchanger of the refrigeration cycle apparatus according to Embodiment 1 of the present invention.

The heat exchanger (12 or 15) in Fig. 10 is configured to use a distributor 52 and distribution capillaries 51 (51 a to 51 d) as the second distribution unit 46, which is an inlet-side distributor used when the heat exchanger (12 or 15) acts as an evaporator. The distribution capillaries 51 (51 a to 51 d) are connected at one ends to the heat transfer tubes 43 and connected at the other ends to the distributor 52. Also, the distributor 52 is connected with the second connecting pipe 42.

At an inlet of the evaporator, because the refrigerant is in a two-phase state, when the refrigerant is distributed via the distribution capillaries 51 in this way, the refrigerant can be distributed uniformly and heat exchange performance is improved. In this case, because pipes smaller in inside diameter than the heat transfer tube 43 is used for the distribution capillaries 51 (51 a to 51 d), the refrigerant may undergo disproportionation reaction in the distribution capillaries 51 (51 a to 51 d). However, again, when the total cross sectional area of the internal cross sectional areas of the heat transfer tubes 43 on all the paths of the heat exchanger (12 or 15) is set larger than the smaller of the internal cross sectional area of the first connecting pipe 41 and the internal cross sectional area of the second connecting pipe 42, i.e., the internal cross sectional area of the second connecting pipe 42, at a minimum, disproportionation reaction of the refrigerant in the heat exchanger (12 or 15) can be controlled.

Note that, to determine "the total cross sectional area of the internal cross sectional areas of the heat transfer tubes 43 on all the paths," although the diameter (d in Fig. 6) based on the concave portions 50b of the concavo-convex surface 50a of the heat transfer tube 43 is used above as the diameter of the heat transfer tubes 43, a diameter based on the convex portions 50c of the concavo-convex surface 50a of the heat transfer tubes 43 may be used. The diameter based on the convex portions 50c of the concavo-convex surface 50a of the heat transfer tubes 43 corresponds to the diameter of a circle inscribed inside tops of the plural convex portions 50c and equals to d - 2 x $\delta$ when height of the convex portions 50c in Fig. 6 is $\delta$ Then, when "the total cross sectional area of the internal cross sectional areas of the heat transfer tubes 43 on all the paths" calculated using "d - 2 $\times$ $\delta$" as the diameter of the heat transfer tubes 43 is set larger than the smaller of the internal cross sectional area of the first connecting pipe 41 and the internal cross sectional area of the second connecting pipe 42, i.e., the internal cross sectional area of the second connecting pipe 42, the effect of controlling disproportionation reaction can be improved further compared to that of the case where "d" is used as the diameter of the heat transfer tubes 43.

This is also true when a flat tube is used for the heat transfer tube 43. That is, whereas the cross sectional area of the passage 49 is calculated above as an internal cross section of the flat shape connecting the bottoms of the concave portions 50b, the internal cross sectional area of the flat shape connecting the tops of the convex portions 50c may be calculated. Then, when the cross sectional area of one passage 49 is calculated as the internal cross sectional area of the flat shape connecting the tops of the convex portions 50c and "the total cross sectional area of the internal cross sectional areas of the heat transfer tubes 43 on all the paths" calculated using the calculation result is set larger than the smaller of the internal cross sectional area of the first connecting pipe 41 and the internal cross sectional area of the second connecting pipe 42, i.e., the internal cross sectional area of the second connecting pipe 42, the effect of controlling disproportionation reaction can be further increased compared to that of the case where the cross sectional area of one passage 49 is calculated as the internal cross section of the flat shape connecting the bottoms of the concave portions 50b.

Also, disproportionation reaction of refrigerant is caused not only when a heat transfer enhancement mechanism such as the concavo-convex surface 50a is provided on the entire heat transfer surface of the heat exchanger (12 or 15), but also when a heat transfer enhancement mechanism such as the concavo-convex surface 50a is provided on any part of the heat transfer surface. Thus, the above configuration provides an effect similar to the one described above.

Note that although description has been given above by taking as an example a case in which the concavo-convex surface 50a is provided on the inner surface (heat transfer surface) of the heat transfer tube 43 as a heat transfer enhancement mechanism configured to enhance heat transfer, the heat transfer enhancement mechanism is not limited to the concavo-convex surface 50a. For example, a configuration may be adopted in which the heat transfer tube 43 itself is a smooth tube (circular tube) with a smooth inner surface and the heat transfer tube 43 is provided with a heat transfer enhancement mechanism, such as a twisted tube formed into a spiral shape, inserted into inner part of the heat transfer tube 43. The same can be said again and effects similar to those described above can be achieved.

Also, although, in the foregoing description, the heat source side heat exchanger 12 or the load side heat exchanger 15 has the structure described above with reference to drawings, both of the heat source side heat exchanger 12 and the load side heat exchanger 15 may have the structure described above with reference to drawings.

Note that with the above configuration, when liquid refrigerant or two-phase refrigerant flows through the passages 49 in the heat transfer tubes 43 of the heat exchanger (12 or 15), disproportionation reaction is less likely to occur, but the liquid refrigerant or two-phase refrigerant does not need to flow everywhere in the passages 49 in the heat transfer tubes 43 of the heat exchanger (12 or 15). When a heat transfer enhancement mechanism such as the concavo-convex surface 50a exists in locations where the liquid refrigerant or two-phase refrigerant flows, disproportionation reaction is less likely to occur, and thus when the liquid refrigerant or two-phase refrigerant flows in some part of the passages 49 in the heat transfer tubes 43 of the heat exchanger (12 or 15), the above configuration makes disproportionation reaction of the refrigerant less likely to occur, and thereby proves effective.

[Extension pipe 4]

As described above, the refrigeration cycle apparatus 100 according to Embodiment 1 has a few operation modes. In these operation modes, refrigerant flows through the extension pipes 4 connecting the outdoor unit 1 with the indoor units 2.

Note that although the high-pressure detector 37 and the low-pressure detector 38 are installed to maintain high pressure and low pressure at target values in the refrigeration cycle, a temperature detector configured to detect saturation temperature may be installed alternatively.

Also, although the first refrigerant flow switching device 11 has been shown as if being a four-way valve, the first refrigerant flow switching device 11 is not limited to the four-way valve, and plural two-way flow switching valves or three-way flow switching valves may be used to allow the refrigerant to flow in a similar manner.

Also, the heat source side heat exchanger 12 and the load side heat exchangers 15a to 15d are generally equipped with a fan, often facilitating condensation or evaporation by sending air, but the present invention is not limited to this configuration. For example, a panel heater or another component using radiation can be used as the load side heat exchangers 15a to 15d and a water-cooled type heat exchanger configured to move heat using water or an antifreeze solution can be used as the heat source side heat exchanger 12. Any heat exchanger can be used as long as the heat exchanger can transfer and receive heat.

Also, although description has been given above by taking as an example a case in which four load side heat exchangers 15a to 15d are provided, any number of load side heat exchangers can be connected. Furthermore, plural outdoor units 1 may be connected making up one refrigeration cycle.

Also, although description has been given by taking as an example the refrigeration cycle apparatus 100 of a cooling-heating switch type in which the indoor unit 2 performs only one of cooling operation and heating operation, the present invention is not limited to this configuration. For example, the present invention can also be applied to a refrigeration cycle apparatus that allows each indoor unit 2 to select either cooling operation or heating operation as desired and enables coexistence of indoor units 2 performing cooling operation and indoor units 2 performing heating operation in the system as a whole. This configuration achieves effects similar to those described above.

Besides, the present invention is also applicable to an air-conditioning apparatus, such as a room air-conditioner, in which only one indoor unit 2 can be connected and to a refrigeration system connected with a show case or unit cooler, and achieves effects similar to those described above when the present invention is applied to any refrigeration cycle apparatus that uses a refrigeration cycle.

Embodiment 2

Embodiment 2 of the present invention will be described with reference to drawings. Differences from Embodiment 1 will mainly be described below. Note that variations applied to components of Embodiment 1 are similarly applied to corresponding components of Embodiment 2.

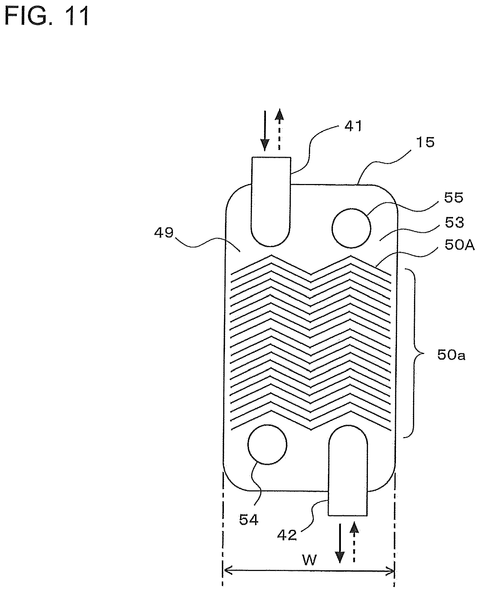

Fig. 11 is a schematic diagram illustrating a configuration of a plate type heat exchanger of a refrigeration cycle apparatus according to Embodiment 2 of the present invention.

Whereas the plate fin tube heat exchanger shown in Embodiment 1 is used when the heat medium that exchanges heat with the refrigerant is air, a plate type heat exchanger is often used when the heat medium that exchanges heat with the refrigerant is water or brine. The plate type heat exchanger is structured so that plural plates 53 are stacked one on top of another, forming a passage 49 between each pair of plates 53 and that the refrigerant and the heat medium flow alternately in each passage 49, thereby exchanging heat between the refrigerant and the heat medium.

In Fig. 11, the first connecting pipe 41 and the second connecting pipe 42 are connected to the passages 49 between the plates 53 and the heat medium flows in through a heat medium inlet 54 and flows out through a heat medium outlet 55. Grooves 50A are provided on surfaces of the plates 53, which are heat transfer surfaces of the plate type heat exchanger, forming concavo-convex surfaces 50a serving as a heat transfer enhancement mechanism configured to enhance heat transfer.

Various shapes are available for the grooves 50A, but the grooves 50A differ in shape from the grooves 50 of the heat transfer tubes 43 of the plate fin tube heat exchanger. However, there is no difference in that the grooves are provided to disturb the flow of refrigerant and improve the heat transfer coefficient and the same as Embodiment 1 can be said. Thus, as with Embodiment 1, when "the total cross sectional area of the cross sectional areas of the passages 49" is set larger than the smaller of the internal cross sectional area of the first connecting pipe 41 and the internal cross sectional area of the second connecting pipe 42, disproportionation reaction of the refrigerant is less likely to occur. Naturally, there is no problem when the first connecting pipe 41 and the second connecting pipe 42 are equal in internal cross sectional area.

In the plate type heat exchanger, "the total cross sectional area of the cross sectional areas of the passages 49" equals a value obtained by multiplying a distance between each pair of plates 53, a width (dimension W in Fig. 11) of the plates 53, and the number of passages 49 that are located between the pairs of plates 53 and through which the refrigerant flows. Thus, when the number of plates 53 is n and the number of passages 49 through which the refrigerant flows and the number of passages through which the heat medium flows are "(n - 1)/2" each, "the total cross sectional area of the cross sectional areas of the passages 49" equals "the distance between each pair of plates 53" x "the width of the plates 53" x "(n - 1)/2." When this value is set larger than the smaller of the internal cross sectional area of the first connecting pipe 41 and the internal cross sectional area of the second connecting pipe 42, disproportionation reaction of the refrigerant is less likely to occur.

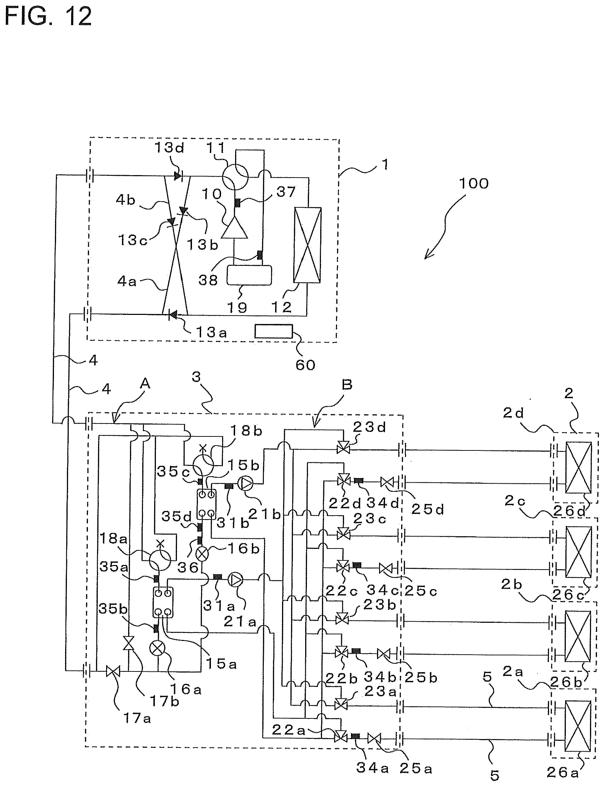

Fig. 12 is a circuit diagram of the refrigeration cycle apparatus according to Embodiment 2 of the present invention.

The refrigeration cycle apparatus 100 shown in Fig. 12 includes a refrigerant circuit A in which the outdoor unit 1 and a heat medium converter 3 that is a relay are connected via extension pipes 4 to circulate the refrigerant. Also, the refrigeration cycle apparatus 100 includes a heat medium circuit B in which the heat medium converter 3 and the indoor units 2 are connected via pipes (heat medium pipes) 5 to circulate a heat medium such as water and brine. The heat medium converter 3 includes the load side heat exchanger 15a and the load side heat exchanger 15b configured to exchange heat between the refrigerant circulating in the refrigerant circuit A and the heat medium circulating in the heat medium circuit B.

The heat medium converter 3 is installed as a separate unit at a location away from the outdoor unit 1 and the indoor units 2, for example, as shown in Fig. 1, in a space above a ceiling or other spaces (hereinafter simply referred to as the space 8) inside the building 9, but different from the indoor space 7. Besides, the heat medium converter 3 may be installed in a common-use space in which an elevator and other facilities are provided.

[Load side heat exchangers 15 (15a and 15b)]

In this refrigeration cycle apparatus 100, the heat exchanger shown in Fig. 11 is used as the load side heat exchanger 15.

[Types of refrigerant, heat exchanger (12 or 26)]

In the refrigeration cycle apparatus 100, the same refrigerant as in Embodiment 1 is used, achieving similar effects. Also, the heat exchanger described in Embodiment 1 is used as the heat source side heat exchanger 12 or use side heat exchangers 26 (26a to 26d).

Operation modes performed by the refrigeration cycle apparatus 100 include a cooling only operation mode in which all the operating indoor units 2 perform cooling operation and a heating only operation mode in which all the operating indoor units 2 perform heating operation. Also, there are a cooling main operation mode performed when the cooling load is larger and a heating main operation mode performed when the heating load is larger.

[Cooling only operation mode]

In the cooling only operation mode, the high-temperature, high-pressure gas refrigerant discharged from the compressor 10 flows into the heat source side heat exchanger 12 through the first refrigerant flow switching device 11, condenses and liquefies into high-pressure liquid refrigerant by transferring heat to ambient air, and flows out of the outdoor unit 1 through a check valve 13a. Then, the refrigerant flows into the heat medium converter 3 through the extension pipe 4. The refrigerant flowing into the heat medium converter 3 passes through an open-close device 17a, and expands into low-temperature, low-pressure, two-phase refrigerant in the expansion device 16a and the expansion device 16b. The two-phase refrigerant flows into each of the load side heat exchanger 15a and the load side heat exchanger 15b acting as evaporators, receives heat from the heat medium circulating through the heat medium circuit B, and thereby becomes low-temperature, low-pressure, gas refrigerant. The gas refrigerant flows out of the heat medium converter 3 through the second refrigerant flow switching device 18a and the second refrigerant flow switching device 18b. Then, the refrigerant flows into the outdoor unit 1 again through the extension pipe 4. The refrigerant flowing into the outdoor unit 1 passes through a check valve 13d and is sucked into the compressor 10 again through the first refrigerant flow switching device 11 and the accumulator 19.

In the heat medium circuit B, the heat medium is cooled by the refrigerant both in the load side heat exchanger 15a and the load side heat exchanger 15b. The cooled heat medium is caused to flow in the pipes 5 by a pump 21 a and a pump 21 b. The heat medium flowing into the use side heat exchangers 26a to 26d through second heat medium flow switching devices 23a to 23d receives heat from the indoor air. The indoor air is cooled, and thereby cools indoor space 7. The refrigerant flowing out of the use side heat exchangers 26a to 26d flows into heat medium flow control devices 25a to 25d, passes through first heat medium flow switching devices 22a to 22d, flows into the load side heat exchanger 15a and the load side heat exchanger 15b to be cooled, and is sucked again into the pump 21 a and the pump 21 b. Note that any of the heat medium flow control devices 25a to 25d corresponding to those of the use side heat exchangers 26a to 26d that are free from heat loads are fully closed. Regarding any of the heat medium flow control devices 25a to 25d corresponding to those of the use side heat exchangers 26a to 26d that are under heat loads, opening degrees are adjusted and the heat loads on the use side heat exchangers 26a to 26d are adjusted.

[Heating only operation mode]

In the heating only operation mode, the high-temperature, high-pressure gas refrigerant discharged from the compressor 10 passes through a first connection pipe 4a and a check valve 13b via the first refrigerant flow switching device 11 and flows out of the outdoor unit 1. Then, the refrigerant flows into the heat medium converter 3 through the extension pipe 4. The refrigerant flowing into the heat medium converter 3 passes through the second refrigerant flow switching device 18a and the second refrigerant flow switching device 18b, flows into each of the load side heat exchanger 15a and the load side heat exchanger 15b, transfers heat to the heat medium circulating through the heat medium circuit B, and becomes high-pressure liquid refrigerant. The high-pressure liquid refrigerant expands into low-temperature, low-pressure, two-phase refrigerant in the expansion device 16a and the expansion device 16b and flows out of the heat medium converter 3 through an open-close device 17b. Then, the refrigerant flows into the outdoor unit 1 again through the extension pipe 4. The refrigerant flowing into the outdoor unit 1 passes through a second connection pipe 4b and a check valve 13c, flows into the heat source side heat exchanger 12 acting as an evaporator, receives heat from ambient air, and thereby becomes low-temperature, low-pressure, gas refrigerant. The gas refrigerant is sucked into the compressor 10 again through the first refrigerant flow switching device 11 and the accumulator 19. Note that movement of the heat medium in the heat medium circuit B is the same as in the cooling only operation mode. In the heating only operation mode, the heat medium is heated by the refrigerant in the load side heat exchanger 15a and the load side heat exchanger 15b and heat is transferred to the indoor air in the use side heat exchanger 26a and the use side heat exchanger 26b to heat the indoor space 7.

[Cooling main operation mode]

In cooling main operation mode, the high-temperature, high-pressure gas refrigerant discharged from the compressor 10 flows into the heat source side heat exchanger 12 through the first refrigerant flow switching device 11, condenses into two-phase refrigerant by transferring heat to ambient air, and flows out of the outdoor unit 1 through the check valve 13a. Then, the refrigerant flows into the heat medium converter 3 through the extension pipe 4. The refrigerant flowing into the heat medium converter 3 flows into the load side heat exchanger 15b acting as a condenser through the second refrigerant flow switching device 18b, transfers heat to the heat medium circulating through the heat medium circuit B, and becomes high-pressure liquid refrigerant. The high-pressure liquid refrigerant expands into low-temperature, low-pressure, two-phase refrigerant in the expansion device 16b. The two-phase refrigerant flows into the load side heat exchanger 15a acting as an evaporator through the expansion device 16a, receives heat from the heat medium circulating through the heat medium circuit B, and thereby becomes low-pressure gas refrigerant, and flows out of the heat medium converter 3 through the second refrigerant flow switching device 18a. Then, the refrigerant flows into the outdoor unit 1 again through the extension pipe 4. The refrigerant flowing into the outdoor unit 1 passes through the check valve 13d and is sucked into the compressor 10 again through the first refrigerant flow switching device 11 and the accumulator 19.
In the heat medium circuit B, heating energy of the refrigerant is transmitted to the heat medium by the load side heat exchanger 15b. Then, the heated heat medium is caused to flow in the pipe 5 by the pump 21 b. The heat medium flowing into the use side heat exchangers 26a to 26d from which a heating request is given via the first heat medium flow switching devices 22a to 22d and the second heat medium flow switching devices 23a to 23d rejects heat to the indoor air. The indoor air is heated and thereby heats the indoor space 7. On the other hand, the cooling energy of the refrigerant is transmitted to the heat medium by the load side heat exchanger 15a. Then, the cooled heat medium is caused to flow in the pipe 5 by the pump 21a. The heat medium flowing into the use side heat exchangers 26a to 26d from which a cooling request is given via the first heat medium flow switching devices 22a to 22d and the second heat medium flow switching devices 23a to 23d receives heat from the indoor air. The indoor air is cooled and thereby cools the indoor space 7. Note that any of the heat medium flow control devices 25a to 25d corresponding to those of the use side heat exchangers 26a to 26d that are free from heat loads are fully closed. Regarding any of the heat medium flow control devices 25a to 25d corresponding to those of the use side heat exchangers 26a to 26d that are under heat loads, the opening degrees are adjusted and the heat loads on the use side heat exchangers 26a to 26d are adjusted.

[Heating main operation mode]

In heating main operation mode, the high-temperature, high-pressure gas refrigerant discharged from the compressor 10 passes through the first connection pipe 4a and the check valve 13b via the first refrigerant flow switching device 11 and flows out of the outdoor unit 1. Then, the refrigerant flows into the heat medium converter 3 through the extension pipe 4. The refrigerant flowing into the heat medium converter 3 flows into the load side heat exchanger 15b acting as a condenser through the second refrigerant flow switching device 18b, transfers heat to the heat medium circulating through the heat medium circuit B, and becomes high-pressure liquid refrigerant. The high-pressure liquid refrigerant expands into low-temperature, low-pressure, two-phase refrigerant in the expansion device 16b. The two-phase refrigerant flows into the load side heat exchanger 15a acting as an evaporator through the expansion device 16a, receives heat from the heat medium circulating through the heat medium circuit B, and flows out of the heat medium converter 3 through the second refrigerant flow switching device 18a. Then, the refrigerant flows into the outdoor unit 1 again through the extension pipe 4. The refrigerant flowing into the outdoor unit 1 passes through the second connection pipe 4b and the check valve 13c, flows into the heat source side heat exchanger 12 acting as an evaporator, receives heat from ambient air, and thereby becomes low-temperature, low-pressure, gas refrigerant. The gas refrigerant is sucked into the compressor 10 again through the first refrigerant flow switching device 11 and the accumulator 19. Note that movement of the heat medium in the heat medium circuit B, as well as operations of the first heat medium flow switching devices 22a to 22d, the second heat medium flow switching devices 23a to 23d, the heat medium flow control devices 25a to 25d and the use side heat exchangers 26a to 26d are the same as in the cooling main operation mode.

[Extension pipe 4 and pipe 5]

In each of the operation modes according to Embodiment 2, the refrigerant flows through the extension pipes 4 connecting the outdoor unit 1 with the heat medium converter 3 and the heat medium such as water and an antifreeze solution is passed through the pipes 5 connecting the heat medium converter 3 with the indoor units 2.

When a heating load and a cooling load coexist on the use side heat exchangers 26, the first heat medium flow switching device 22 and the second heat medium flow switching device 23 corresponding to the use side heat exchanger 26 performing heating operation are switched to the passage connected to the load side heat exchanger 15b for heating. Also, the first heat medium flow switching device 22 and the second heat medium flow switching device 23 corresponding to the use side heat exchanger 26 performing cooling operation are switched to the passage connected to the load side heat exchanger 15a for cooling. Consequently, each indoor unit 2 can perform heating operation and cooling operation freely.

Note that the first heat medium flow switching device 22 and the second heat medium flow switching device 23 may be of any type, such as a three-way valve capable of switching a three-way passage or a combination of two on-off valves or other similar valves configured to open and close a two-way passage as long as the flow switching devices can switch among passages. Also, a valve, such as a stepping-motor driven mixing valve, capable of changing flow rates of a three-way passage or a combination of two electronic expansion valves or other similar valves capable of changing flow rates of a two-way passage may be used as the first heat medium flow switching device 22 and the second heat medium flow switching device 23. Furthermore, other than two-way valves, a control valve having a three-way passage may be used as the heat medium flow control device 25 and installed together with a bypass pipe configured to bypass the use side heat exchanger 26. Also, a stepping-motor-driven valve, such as a two-way valve and a three-way valve with one end closed, capable of controlling flow rates of passages may be used as the heat medium flow control device 25. Also, using an on-off valve configured to open and close a two-way passage as the heat medium flow control device 25, an average flow rate may be controlled by repeatedly turning on and off the on-off valve.

Also, although the first refrigerant flow switching device 11 and the second refrigerant flow switching device 18 have been shown as if being four-way valves, the first refrigerant flow switching device 11 and the second refrigerant flow switching device 18 are not limited to the four-way valves, and plural two-way flow switching valves or three-way flow switching valves may be used to allow the refrigerant to flow in a similar manner.

Also, the same is true when only a single use side heat exchanger 26 and a single heat medium flow control device 25 are connected. Furthermore, there is naturally no problem even when plural devices that perform same functions are installed as the load side heat exchanger 15 and the expansion device 16. Furthermore, although description has been given by taking as an example a case in which the heat medium flow control device 25 is incorporated in the heat medium converter 3, the heat medium flow control device 25 is not limited to this configuration, and the heat medium flow control device 25 may be incorporated in the indoor unit 2 or the heat medium converter 3 and the indoor units 2 may be configured to be separate units.

Liquids available for use as the heat medium include, for example, brine (antifreeze solution), water, a mixture of brine and water, and a mixture of water and an additive with a high anticorrosive effect. Thus, in the refrigeration cycle apparatus 100, even when the heat medium leaks into the indoor space 7 through the indoor unit 2, use of the heat medium high in safety contributes to improvement of safety.

Also, the heat source side heat exchanger 12 and the use side heat exchangers 26a to 26d are generally equipped with a fan, often facilitating condensation or evaporation by sending air, but the present invention is not limited to this configuration. For example, a panel heater or another component using radiation can be used as the use side heat exchangers 26a to 26d. Also, a water-cooled type heat exchanger configured to move heat using water or an antifreeze solution can be used as the heat source side heat exchanger 12. Any heat exchanger can be used as long as the heat exchanger is structured to be able to transfer and receive heat. When a water-cooled type heat exchanger is used as the heat source side heat exchanger 12, the heat exchanger described with reference to Fig. 11 in Embodiment 2 is used.

Also, although description has been given above by taking as an example a case in which four use side heat exchangers 26a to 26d are provided, any number of use side heat exchangers can be connected. Furthermore, plural outdoor units 1 may be connected making up one refrigeration cycle.

Also, although description has been given by taking as an example a case in which two load side heat exchangers 15a and 15b are provided, naturally, the number of load side heat exchangers is not limited to two, and any number of load side heat exchangers may be installed as long as the heat medium can be cooled and heated.

Also, whereas description has been given of a case in which a plate type heat exchanger is used as the load side heat exchanger 15, any type may be used rather than the plate type as long as heat can be exchanged between the refrigerant and the heat medium. Similarly, when a water-cooled heat source side heat exchanger 12 is used, any type may be used rather than the plate type as long as heat can be exchanged between the refrigerant and the heat medium.

Also, the number of pumps 21 a or 21 b is not limited to one, and plural pumps of small capacity may be arranged in parallel.

Also, although a system that enables coexistence of indoor units 2 performing cooling operation and indoor units 2 performing heating operation has been taken as an example in describing a system in which the compressor 10, four-way valve (first refrigerant flow switching device) 11, and heat source side heat exchanger 12 are housed in the outdoor unit 1, the use side heat exchanger 26 configured to exchange heat between the air in the air-conditioned space and the refrigerant is housed in the indoor units 2, the load side heat exchanger 15 and the expansion device 16 are housed in the heat medium converter 3, the outdoor unit 1 and the heat medium converter 3 are connected by the extension pipes 4 to circulate the refrigerant, each indoor unit 2 and the heat medium converter 3 are connected by a pair of pipes 5 to circulate the heat medium, and heat is exchanged between the refrigerant and the heat medium by the load side heat exchanger 15, the present invention is not limited to this configuration. For example, the present invention is also applicable to a system in which the outdoor unit 1 described in Embodiment 1 and the heat medium converter 3 are combined, allowing the indoor units 2 to perform only cooling operation or heating operation, and similar effects can be achieved. Reference Signs List

1 heat source unit (outdoor unit) 2, 2a, 2b, 2c, 2d indoor unit 3 heat medium converter (relay) 4 extension pipe (refrigerant pipe) 4a first connection pipe 4b second connection pipe 5 pipe (heat medium pipe) 6 outdoor space 7 indoor space 8 space above a ceiling or other spaces different from outdoor space and indoor space 9 building 10 compressor 11 first refrigerant flow switching device (four-way valve) 12 heat source side heat exchanger (first heat exchanger) 13a, 13b, 13c, 13d check valve 15, 15a, 15b, 15c, 15d load side heat exchanger (second heat exchanger) 16, 16a, 16b, 16c, 16d expansion device 17a, 17b open-close device 18, 18a, 18b second refrigerant flow switching device 19 accumulator 21 a, 21 b pump

22, 22a, 22b, 22c, 22d first heat medium flow switching device23, 23a, 23b, 23c, 23d second heat medium flow switching device 25, 25a, 25b, 25c, 25d heat medium flow control device 26, 26a, 26b, 26c, 26d use side heat exchanger 27 load side heat exchanger liquid refrigerant temperature detector 28 load side heat exchanger gas refrigerant temperature detector 37 high-pressure detector 38 low-pressure detector 41 first connecting pipe 42 second connecting pipe 43 heat transfer tube 44 fin 45 first distribution unit 46 second distribution unit 47, 47a, 47b first distribution header 48, 48a, 48b second distribution header 49 passage 50, 50A groove 50a concavo-convex surface 50b concave portion 50c convex portion 51 a, 51 b, 51 c, 51 d distribution capillary 52 distributor 53 plate 54 heat medium inlet 55 heat medium outlet 60 controller 100 refrigeration cycle apparatus

A refrigerant circuit B heat medium circuit

**Claims**

1. A refrigeration cycle apparatus comprising a refrigeration cycle connecting a compressor, a first heat exchanger, an expansion device, and a second heat exchanger by refrigerant pipes and configured to circulate refrigerant, the refrigerant being a single component refrigerant of a substance having a property of undergoing disproportionation reaction or a mixed refrigerant containing a substance having a property of undergoing disproportionation reaction and another substance, at least one of the first heat exchanger and the second heat exchanger including one or more passages, a heat transfer enhancement mechanism provided to the one or more passages, and two connecting pipes serving as an inlet and an outlet for the refrigerant from and to another component in the refrigeration cycle, a total cross sectional area of internal cross sectional areas of the one or more passages being larger than an internal cross sectional area of at least one of the two connecting pipes.

2. The refrigeration cycle apparatus of claim 1, wherein the total cross sectional area of the internal cross sectional areas of the one or more passages is larger than a smaller one of the internal cross sectional areas of the two connecting pipes.

3. The refrigeration cycle apparatus of claim 1, wherein the total cross sectional area of the internal cross sectional areas of the one or more passages is larger than a larger one of the internal cross sectional areas of the two connecting pipes.

**4.** The refrigeration cycle apparatus of any one of claims 1 to 3, wherein the heat transfer enhancement mechanism is a concavo-convex surface provided on a heat transfer surface of a heat transfer tube forming the one or more passages.

**5.** The refrigeration cycle apparatus of claim 4, wherein the internal cross sectional areas of the one or more passages are calculated based on a concave portion of the concavo-convex surface.

**6.** The refrigeration cycle apparatus of claim 5, wherein
a plurality of the concave portions are formed at circumferential intervals on the heat transfer surface of the heat transfer tube, and
each of the internal cross sectional areas calculated based on the concave portion of the concavo-convex surface is an area of a circle inscribed inside bottoms of the plurality of the concave portions.

**7.** The refrigeration cycle apparatus of claim 4, wherein the internal cross sectional areas of the one or more passages are calculated based on a convex portion of the concavo-convex surface.

**8.** The refrigeration cycle apparatus of claim 7, wherein
a plurality of the convex portions are formed at circumferential intervals on the heat transfer surface of the heat transfer tube, and
each of the internal cross sectional areas calculated based on the convex portion of the concavo-convex surface is an area of a circle inscribed inside tops of the plurality of the convex portions.

**9.** The refrigeration cycle apparatus of any one of claims 4 to 8, wherein a concave portion of the concavo-convex surface is a spiral-shaped groove.

**10.** The refrigeration cycle apparatus of any one of claims 1 to 9, wherein refrigerant in liquid state or in two-phase state flows in a location of any of the one or more passages.

**11.** The refrigeration cycle apparatus of any one of claims 1 to 10, further comprising:

an outdoor unit configured to house one of the first heat exchanger and the second heat exchanger; and
an indoor unit configured to house an other of the first heat exchanger and the second heat exchanger.

**12.** The refrigeration cycle apparatus of any one of claims 1 to 10, further comprising:

an outdoor unit configured to house one of the first heat exchanger and the second heat exchanger; and
a relay formed separately from the outdoor unit and an indoor unit as a separate unit, the relay being installable at a location away from the outdoor unit and the indoor unit and configured to house an other of the first heat exchanger and the second heat exchanger.

**13.** The refrigeration cycle apparatus of claim 12, wherein the first heat exchanger or the second heat exchanger housed in the relay is configured to exchange heat between the refrigerant and a heat medium.

**14.** The refrigeration cycle apparatus of any one of claims 11 to 13, wherein the first heat exchanger or the second heat exchanger housed in the outdoor unit is configured to exchange heat between the refrigerant and a heat medium.

**15.** The refrigeration cycle apparatus of any one of claims 11 to 14, further comprising:

one or more of the outdoor units; and
one or more of the indoor units, and

configured to supply air conditioned by the one or more of the indoor units to a room.

**16.** The refrigeration cycle apparatus of any one of claims 1 to 15, further comprising a refrigerant flow switching device configured to switch passages for the refrigerant, and having
a first operation mode causing one of the first heat exchanger and the second heat exchanger to act as a condenser and an other of the first heat exchanger and the second heat exchanger to act as an evaporator, and
a second operation mode causing the one of the first heat exchanger and the second heat exchanger to act as an evaporator and the other of the first heat exchanger and the second heat exchanger to act as a condenser.

17. The refrigeration cycle apparatus of any one of claims 1 to 16, wherein the substance having the property of undergoing disproportionation reaction is 1,1,2-trifluoroethylene.

FIG. 1

# FIG. 2

FIG. 3

FIG. 4

## FIG. 5

## FIG. 6

FIG. 7

FIG. 8

## FIG. 9

## FIG. 10

# FIG. 11

## FIG. 12

## INTERNATIONAL SEARCH REPORT

International application No.

PCT/JP2014/057049

A. CLASSIFICATION OF SUBJECT MATTER
*F25B1/00(2006.01)i, C09K5/04(2006.01)i, F28F1/40(2006.01)i*

According to International Patent Classification (IPC) or to both national classification and IPC

B. FIELDS SEARCHED

Minimum documentation searched (classification system followed by classification symbols)
F25B1/00, C09K5/04, F28F1/40

Documentation searched other than minimum documentation to the extent that such documents are included in the fields searched
Jitsuyo Shinan Koho        1922-1996    Jitsuyo Shinan Toroku Koho    1996-2014
Kokai Jitsuyo Shinan Koho  1971-2014    Toroku Jitsuyo Shinan Koho    1994-2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-263492 A  (Sanyo Electric Co., Ltd.), 11 October 2007 (11.10.2007), paragraphs [0020], [0031]; fig. 2, 5 (Family: none) | 1-17 |
| Y | WO 2012/157764 A1  (Asahi Glass Co., Ltd.), 22 November 2012 (22.11.2012), paragraph [0013] (Family: none) | 1-17 |
| Y | JP 2012-131994 A  (JX Nippon Oil & Energy Corp.), 12 July 2012 (12.07.2012), paragraph [0127] & US 2012/0132848 A1    & CN 102533392 A | 1-17 |

☒  Further documents are listed in the continuation of Box C.         ☐    See patent family annex.

| | |
|---|---|
| * Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>10 June, 2014 (10.06.14) | Date of mailing of the international search report<br>24 June, 2014 (24.06.14) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2014/057049

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2012-505296 A (E.I. Du Pont de Nemours & Co.), 01 March 2012 (01.03.2012), paragraph [0015] & US 2009/0143604 A1 & US 2010/0090156 A1 & US 2012/0083619 A1 & US 2012/0168672 A1 & WO 2010/042781 A2 & WO 2009/067571 A1 & CN 101861322 A & CA 2736216 A & CN 102177118 A | 1-17 |
| Y | JP 2011-257111 A (Showa Denko Kabushiki Kaisha), 22 December 2011 (22.12.2011), paragraphs [0045], [0046]; fig. 1 to 4 & US 2011/0303401 A1 & CN 102287970 A | 1-17 |
| Y | JP 2009-257741 A (Daikin Industries, Ltd.), 05 November 2009 (05.11.2009), paragraph [0160] (Family: none) | 1-17 |
| Y | WO 2010/050002 A1 (Mitsubishi Electric Corp.), 06 May 2010 (06.05.2010), paragraphs [0010] to [0017]; fig. 3 & EP 2309199 A1 & WO 2010/050002 A1 & CN 102112818 A | 11-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 12157764 A